# EUROPEAN PATENT APPLICATION

(11) **EP 0 588 595 A1**
(43) Date of publication of application: **23.03.1994**
(21) Application number: 93307228.2
(22) Date of filing: 14.09.1993
(51) Int. Cl.: B60C 23/00

(54) **Combined original and retrofit central tire inflation system**

(30) Priority: 15.09.1992 US 945199
(71) Applicant: OSHKOSH TRUCK CORPORATION, Oshkosh, Wisconsin 54903 (US)
(72) Inventor: Braun, Eric E., Neenah, Wisconsin 54956 (US); Maxfield, LeRoy, Oshkosh, Wisconsin 54904 (US); Herscovici, Saul, Waterloo, Iowa 50702 (US); Jensen, Douglas, Berlin, Wisconsin 54923 (US); Verhoff, Donald, Oshkosh, Wisconsin 54904 (US)
(74) Representative: Heath, Derek James

(57) **Abstract**

An improved central tire inflation system intended for both new vehicles and retrofitting existing vehicles is provided. The disclosed central tire inflation system provides communication from an air supply (29) on the vehicle chassis to the tire via a seal assembly which accommodates two rotary seals (26,27). The two rotary seals and seal carrier along with the rotating hub define an annular chamber (28). Conduits are provided leading from the annular chamber to the air supply mounted on the vehicle and also to the interior of the tire thereby providing sealed fluid communication between the chassis-mounted air supply and the tire.

## Description

This invention relates generally to an improved central tire inflation system intended for implementation as original equipment and for use as a kit for retrofitting existing vehicles not originally equipped with a central tire inflation system. More particularly, the invention relates to a seal carrier or spindle sleeve which provides sealed communication between (a) the air supply located on the chassis and (b) the wheel hub. The seal carrier or spindle sleeve may be easily mounted to existing axle housings or spindles without extensive modification of original equipment or extensive design changes.

### BACKGROUND OF THE INVENTION

The concept of a central tire inflation system (CTIS) for vehicles is well-known. A central tire inflation system allows the operator of the vehicle to control the air pressure in the tires. Controlling the air pressure in the tires is especially advantageous for off-road vehicles. For example, an off-road vehicle may be required to operate on soft ground, sand or swamps. To obtain traction in such an environment, the tire pressure should be reduced.

In contrast, an off-road vehicle may be required travel on harder surfaces, including highways. To obtain proper traction on harder surfaces and to enable the vehicle to operate safely at high speeds, the tire pressure should be substantially higher, such as near the tire manufacturer's maximum recommended tire pressure.

The difference between preferred high tire pressures (hard surfaces) and preferred low tire pressures (soft terrain) may be quite large. For example, some truck tires recommend a maximum tire pressure of 75 psi for highway conditions and 8 to 15 psi for extremely soft conditions such as sand and swamps. A tire pressure for intermediate road conditions may be approximately 40 psi.

Another reason justifying the employment of central tire inflation systems is that road surface deterioration is substantially reduced when tires are operating at proper tire pressures. Tires that are over-inflated for the load are known to be a major cause for road surface deterioration.

Still another reason justifying central tire inflation systems is fuel economy. Soft tires on the highway reduce gas or fuel mileage. Therefore, a central tire inflation system that automatically controls the air pressure of tires on a highway will improve road surface longevity and will enhance fuel efficiency.

While central tire inflation systems in general are well-known and retrofitting kits for equipping existing vehicles with a central tire inflation system are also known, the presently available systems and kits are unsatisfactory because they either require extensive design changes in new vehicles or require extensive modifications to existing vehicles. The present invention overcomes these problems by providing a seal carrier that easily mounts on an existing axle housing or spindle. The seal carrier provides communication from the air supply mounted on the chassis to the wheel hub. The present invention requires only minor modifications to the axle housing or to the spindle and further requires only minor modifications to an existing hub or wheel. Further, if the hub cannot be modified, new hubs may be provided without adversely affecting the economics of the central tire inflation system because hubs are not expensive when considering the overall cost of a vehicle.

### BRIEF DESCRIPTION OF THE INVENTION

The present invention makes a significant contribution to the central tire inflation system art by providing an improved central tire inflation system that may be easily incorporated into new vehicle designs and further may be easily incorporated into existing vehicles with retrofitting kits. The present invention accomplishes this without extensive design changes in new vehicles and further without extensive modifications to existing vehicles that are being retrofitted.

The improved central tire inflation system is based upon an improved seal and air passageway system providing communication between a rotating tire and an air supply mounted on the chassis. The improved seal and air passageway system is provided in two basic embodiments: a seal carrier system and a spindle sleeve system. Both the seal carrier and spindle sleeve systems may be employed with wheel ends mounted on rigid (driving or steering) axles and wheel ends with independent suspension. Wheel ends with rigid axles include either a fixed axle housing or a spindle which supports the wheel hub and bearings. Wheel ends with independent suspension include a solid or tubular spindle structure for support. The term "spindle means" is intended to represent all types of wheel end spindles whether tubular or solid.

The seal carrier is fixedly mounted on an axle housing or spindle between the axle housing or spindle (spindle means) and the rotatable hub. The radially outboard end of the seal carrier is received by the inboard end of the rotating hub. The seal carrier and hub carry inboard and outboard rotary seals located therebetween. The two rotary seals, or seal means, are disposed on opposing sides of a chamber which has a first conduit leading to an air supply on the vehicle chassis and a second conduit leading to the interior of the tire. The chamber is defined by the seal carrier, the hub, and the inboard and outboard seals. The chamber in combination with the conduit leading to the air supply forms a first communication means which provides fluid communication between the chamber and the air supply. The air supply is mounted on the chassis or other appropriate place on the vehicle.

A second communication means provides fluid communication between the chamber and the rotating tire. The second communication means consists of a series of conduits and ducts leading from the chamber through the hub and wheel to the interior of the tire.

In the seal carrier embodiments, the first communication means is essentially contained within the seal carrier. The second communication means is essentially contained within the rotating hub. An appropriate passageway is formed in the outboard side of the hub and then radially outward through the hub and through the wheel to provide communication with the interior of the tire.

The second primary form of the present invention features a spindle sleeve mounted on a spindle which supports the rotating hub, bearings, wheel and tire. If the axle or wheel end is a driving type, the axle shaft will also be supported. A non-driving axle or wheel end, such as a trailer axle, needs no axle shaft and the spindle is generally solid. Further, as noted above, wheel ends with independent suspension may also employ either a solid or tubular spindle.

The spindle sleeve carries an inboard seal and an outboard seal. The inboard and outboard seals are disposed on opposing sides of a first conduit which provides communication to the air supply located on the chassis or elsewhere on the vehicle. The inboard and outboard seals are also disposed on opposing sides of a second conduit which provides fluid communication to the interior of the tire.

The sealed passageway provided between the inboard and outboard seals, or seal means, and extending toward the vehicle air supply is also referred to as a first communication means which provides communication between the spindle sleeve and the air supply. The second communication means is a passageway between the first communication means and the interior of the tire. The second communications means is normally a passageway through the rotating hub and through the wheel to the interior of the tire. The second communication means may further include an external conduit that passes outside of the rotating hub and eventually through the wheel to the interior of the tire.

As noted above, both the seal carrier and spindle sleeve embodiments of the present invention are equally applicable to driving and non-driving rigid axles and independent wheel ends, both steerable and non-steerable.

An additional feature that can be incorporated into the hub is to add a separate mounting flange positioned to allow a common wheel design to be used on all axles and to allow the wheels to be mounted with the same orientation on each axle end. This feature allows the wheel mounted central tire inflation system components to be identically mounted on each wheel. Only one spare wheel/tire is necessary for the vehicle.

It is therefore an object of the present invention to provide an improved central tire inflation system for new vehicles that requires only modest design changes to the new vehicles.

It is another object of the present invention to provide a central tire inflation system requiring only modest modifications to existing vehicles not currently equipped with a central tire inflation system.

It is still another object of the present invention to provide a method for retrofitting existing vehicles with an improved central tire inflation system.

Another object of the present invention is to provide an improved kit for retrofitting existing vehicles with a central tire inflation system.

Yet another object of the present invention is to provide an improved central tire inflation system applicable to driving axles, non-driving axles, steerable wheel ends, non-steerable wheel ends and wheel ends with or without independent suspension.

Still another object of the present invention is to provide a central tire inflation system for wheel ends with more than one tire and wheel such as dual tire wheel ends.

### BRIEF DESCRIPTION OF THE DRAWINGS

This invention is illustrated more or less diagrammatically in the accompanying drawings, wherein:
Figure 1 is a front cross-sectional view of one seal carrier embodiment of a left wheel-end assembly made in accordance with the present invention;
Figure 2 is a front cross-sectional view of one spindle sleeve embodiment of a left wheel-end assembly made in accordance with the present invention;
Figure 2A is a detail section of the porting for the sleeve shown in the Figure 2 embodiment;
Figure 3 is a front cross-sectional view of yet another spindle sleeve embodiment of a left wheel-end assembly made in accordance with the present invention; and
Figure 3A is a detail section of the porting for the sleeve shown in the Figure 3 embodiment.

### DETAILED DESCRIPTION OF THE INVENTION

Like reference numerals will be used to refer to like or similar parts from figure to figure in the following description of the drawings.

The dramatic improvement contributed by this invention is best understood after consideration of how conventional central tire inflation systems are designed. First, conventional central tire inflation systems are designed so they are an integral part of the axle housing or spindle and wheel hub. Therefore, the entire wheel-end assembly of vehicles must be redesigned to incorporate systems taught by the prior art. In retrofitting existing vehicles with a central tire inflation system, the prior art discloses only designs that require extensive and custom modifications. Further, many kits known in the prior art require new wheels, hubs, spindles or axle housings and further require that the axles be modified. The present invention provides an effective, simplified and less expensive solution to the above problems because the design changes required to incorporate the central tire inflation system in new vehicles are relatively minor and the modifications required for retrofitting existing vehicles are not extensive.

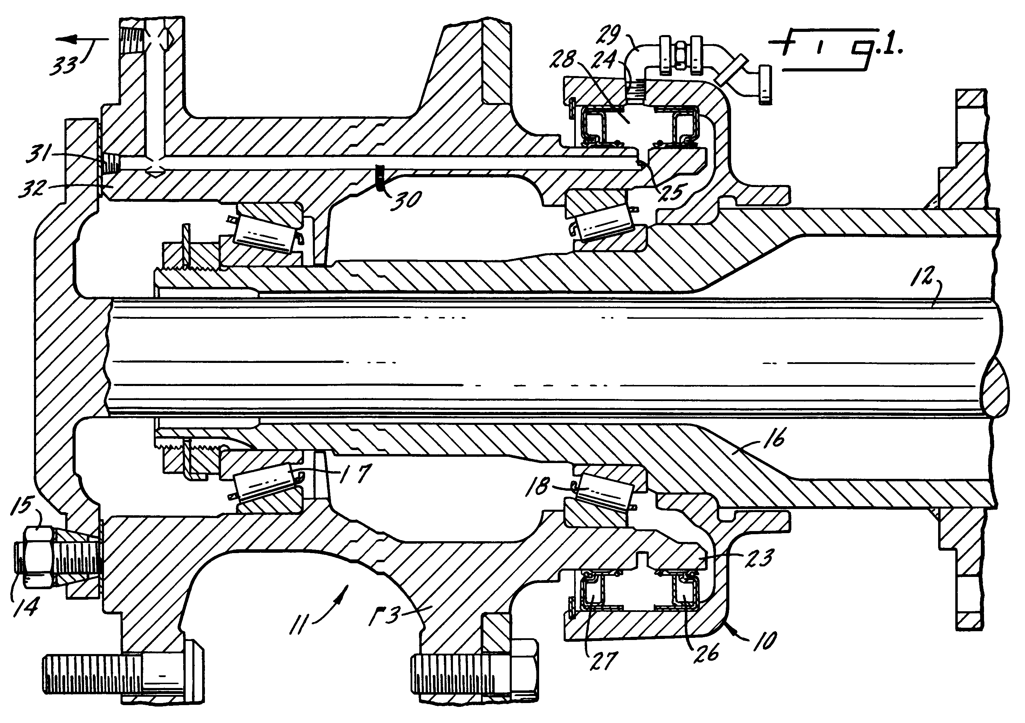

As seen in Figure 1, an improved seal carrier 10 for a wheel-end 11 is provided. A conventional axle shaft 12 is fixedly attached to a rotatable wheel hub 13 via a plurality of studs 14 and nuts 15, only one of which is shown in Figure 1. The hub 13, in turn, is rotatably mounted on the spindle 16 via replacement bearings 17, 18. The inboard end 23 of the hub 13 is received within the seal carrier 10. The seal carrier 10 includes two ports: port 24, which is in communication with an air supply mounted on the chassis via the conduit 29; and port 25 which is in communication with the interior of the tire (not shown) via the conduit 30.

The seal carrier 10 and the hub 13 accommodate two rotary seals or seal means, shown as inboard seal 26 and outboard seal 27. A passageway or chamber 28 is defined by the annular area bound by the inboard seal 26, the outboard seal 27, the seal carrier 10 and the inboard end 23 of the hub 13. The chamber 28, the port 24 and the conduit 29 provide a first communication means or passageway between the seal carrier 10 and the air supply mounted on the chassis of the vehicle (not shown). In the preferred embodiment, the sizes of the seals 26, 27 are the same for economy of manufacture but different sized seals 26, 27 may be employed.

The other half of the fluid communication, or second communication means, is provided by the second port 25 leading into the air passageway 30 in the hub 13. The air passageway 30 extends from the inboard end 23 of the hub 13 to the outboard end 32 of the hub 13 and then extends axially outward as shown by arrow 33 towards the wheel (not shown) and finally to the interior of the tire (not shown). The conduit 30 is drilled from the outboard end 32 of the hub toward the inboard end 23 and sealed with a plug 31.

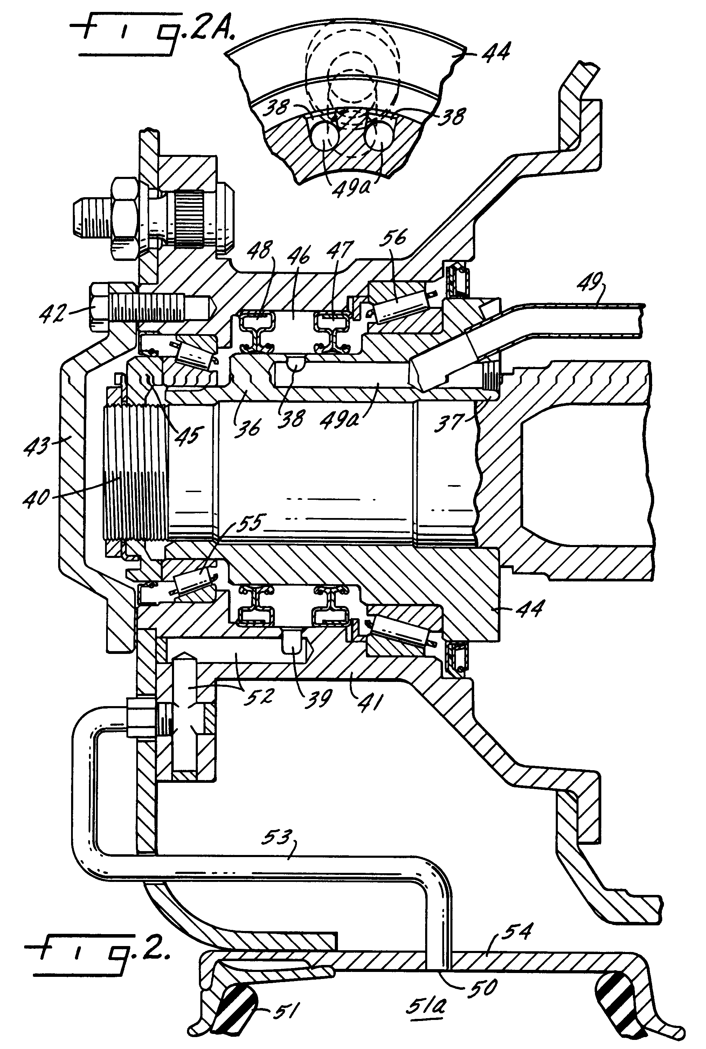

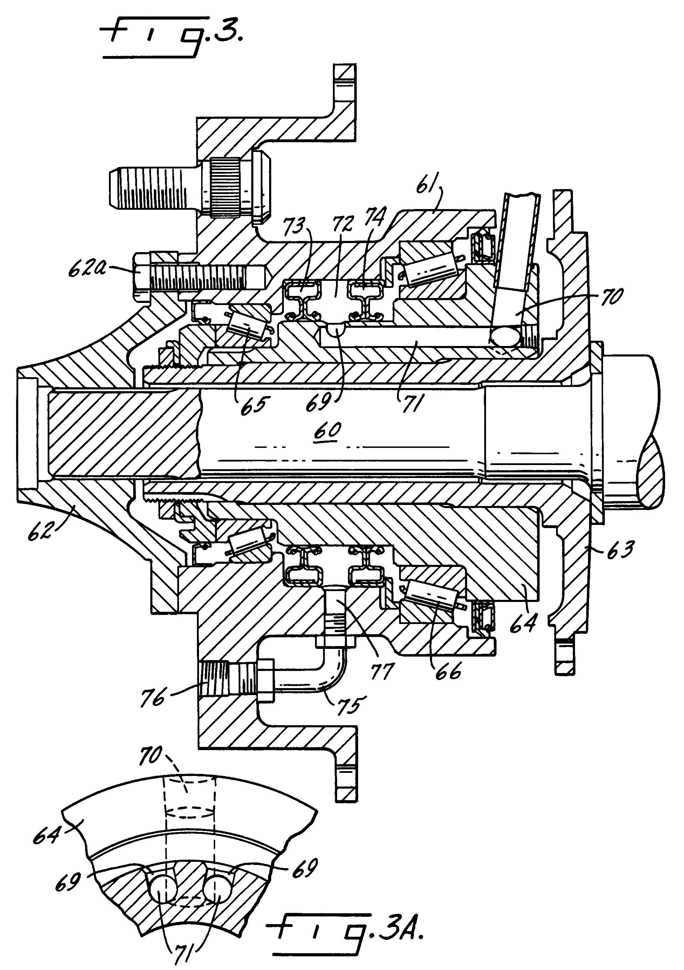

Figure 1 is an illustration of the "seal carrier" 10 embodiment of the present invention wherein a seal carrier 10 is fixedly mounted to a spindle 16. Figures 2 and 3 show alternative embodiments to the present invention featuring the spindle sleeve configuration.

Referring to Figure 2, a non-driving axle-spindle 40 is shown with an end cap 43 attached to a wheel hub 41 by bolts 42 (only one bolt 42 being shown in Figure 2). A spindle sleeve 44 may be fixedly attached to the axle-spindle 40 by the clamp ring, such as 45, which is threadably received on the threaded outboard end of the axle-spindle 40. One preferred embodiment employs a thermal or press fit between the spindle sleeve 44 and the axle-spindle 40 thereby eliminating the need for the clamp ring 45. The hub 41 is rotatably mounted to the spindle sleeve 44 via the replacement bearings shown at 55, 56.

The spindle sleeve 44 provides the first communication means, or the fluid communication between the air supply mounted on the vehicle chassis (not shown) and the spindle sleeve 44. The conduit 49 and a pair of parallel conduits 49a provide communication from the air supply mounted on the vehicle (not shown) to the chamber 46 via the first ports 38 (see Figure 2A). The dual parallel passageways 49a and ports 38 are employed for increased airflow. The chamber 46 is formed by an inboard seal 47, an outboard seal 48, the wheel hub 41 and the spindle sleeve 44.

Fluid communication is provided between the chamber 46 and the interior of the tire 51a by a second communication means, or the conduit passageway provided by the second port 39 and the internal air passageway 52 located in the wheel hub 41 and the external conduit 53 which eventually terminates at the port 50 in the interior of the tire shown at 51a. The external conduit also passes through the wheel 54. Some central tire inflation systems may include an air valve in the flow path between the hub and the tire. This allows the air pressure to be held in the tire and the pressure on the hub air seals to be relieved during times when the inflation system is not operating thus prolonging seal life. Because of these advantages, the incorporation of an air valve between the hub and tire is preferred.

Turning now to Figure 3, an alternative, sleeve-type embodiment more akin to that shown in Figure 2 is shown. The driving axle shaft 60 is attached to rotate with an associated wheel hub 61 by an end cap 62 and bolts 62a. The axle shaft 60 rotates within a stationary spindle 63. A spindle sleeve 64 is attached to the spindle 63 by a thermal or press fit. The hub 61 rotates with respect to the spindle sleeve 64 via replacement bearings 65 and 66. Similarly to the first communication means illustrated in Figure 2, communication is established between the spindle sleeve 64 and the air supply mounted on the vehicle (not shown) by a pair of first ports 69, the two parallel conduits 71 and the conduit 70 which lead from an annular chamber 72 to the air supply. The dual parallel conduits 71 and dual ports 69 provide increased air flow (see Figure 3A). The annular chamber 72 is bound by the hub 61, the spindle sleeve 64, the outboard rotary seal 73 and the inboard rotary seal 74. Chamber 72, which is formed by the rotary seals 73, 74, the hub 61 and the spindle sleeve 64, together with conduits 70 and 71 define a first communication means between the air supply carried by the vehicle and the chamber 72.

The second communication means or conduit means extends from the second port 77 in the chamber 72 to the interior of the tire (not shown) via the conduits or passageways indicated at 75 and 76. The conduit 76 eventually extends through a passageway in the wheel (not shown) to the interior of the tire (not shown). Finally, an alternative design is to use a clamp ring (not shown) to attach the sleeve 64 to the spindle 63.

Referring again to Figure 3, it will be noted that some spindles provide an outer bearing surface of sufficient length to accommodate both the outboard replacement bearing 65 and the spindle sleeve 64 and therefore a shortened spindle sleeve 64 is provided that extends up to but not beyond the outboard bearing 65. The original outboard bearing 65 is retained and does not need to be replaced by a larger bearing.

Finally, the seal carrier and spindle sleeve embodiments of the present invention can be employed on wheel ends having dual tires. To supply air to the second tire in a dual tire wheel end, an additional conduit is provided either in the hub 13 (see Figure 1) along with the appropriate external conduits leading to the interior of the second tire, or the second tire is tied in with the external conduit of the first tire anywhere between the hub and interior of the first tire. The preferred method of supplying dual tires is with a dual outlet air valve. However, it will be noted that sufficiently high pressure must be maintained in adjacent dual tires or the adjacent tires will rub each other causing undue wear to the sidewalls.

Thus, the present invention provides an improved method for incorporating a central tire inflation system into a new vehicle or an existing vehicle via the seal carrier 10 (Figure 1) or via the spindle sleeves 44, 64 (Figures 2, 3). No modification to the axle-spindles 16, 40, 63 or axle shafts 12, 60 is required. If the conduits cannot be easily fabricated into the wheel hubs 13, 41, 61, new wheel hubs may be required. However, if ample clearance is provided for the conduits, the existing wheel hubs may be modified to incorporate the present invention.

The appropriate rotary seals may be of any type that accomplishes the intended purposes such as lip, face or integral type seals. Additional sealing capability may be provided by seals containing lubricants associated with the hub. Seals incorporating lubricants will also prevent contaminants from the outside entering the air passageway system. As noted above, the above designs are intended for both retrofit of existing axles or wheel ends and for new production.

Although three preferred embodiments of the present invention have been illustrated and described, it will at once be apparent to those skilled in the art that variations may be made within the spirit and scope of the invention. Accordingly, it is intended that the scope of the invention be limited solely by the scope of the hereafter appended claims and not by any specific wording in the foregoing description.

## Claims

1. A central tire inflation system for at least one tire of a chassis-mounted vehicle, the system comprising:
a spindle means,
a seal carrier,
a hub which receives the spindle means and the seal carrier, the hub being supported on bearing means located between the spindle means and the hub which enables the hub, together with the seal carrier, a wheel and the tire mounted thereon, to rotate with respect to the spindle means,
a chamber located between the hub and the seal carrier, the chamber being formed between an inboard seal means and an outboard seal means, the inboard seal means and outboard seal means both being disposed between the hub and the seal carrier,
first conduit means communicating with a fluid pressurizing system carried by the chassis, the first conduit means having a first port communicating with the chamber, and
second conduit means communicating with the interior of the tire and having a second port communicating with the chamber.

2. The central tire inflation of claim 1,
wherein the second conduit means communicates with the interior of the tire via a passageway in the hub which communicates with a passageway in the wheel which communicates with the interior of the tire.

3. The central tire inflation of claim 1,
wherein the second conduit means communicates with the interior of the tire via a passageway in the hub which communicates with an external conduit means which communicates with a passageway in the wheel which communicates with the interior of the tire.

4. The central tire inflation of claim 1,
wherein the seal carrier is a spindle sleeve fixedly mounted on the spindle means and received substantially between the hub and the spindle means, the chamber being located between the hub and the spindle sleeve, the chamber being formed between an inboard seal means and an outboard seal means, the inboard seal means and outboard seal means both being disposed between the hub and the spindle sleeve.

5. The central tire inflation system of claim 1,
wherein the tire is one of two adjacent dual tires of a dual tire wheel end.

6. The central tire inflation system of claim 1,
wherein the second conduit means includes a valve to isolate the tire from the first conduit means.

7. A seal and air passageway system providing communication between at least one rotatable tire and a chassis, the system comprising:
first communication means,
second communication means,
seal means,
spindle means,
a hub,
a wheel,
a tire,
means for fixedly mounting the first communication means on the spindle means,
means for rotatably engaging the first communication means with an inner diameter of the hub,
the first communication means providing sealed fluid communication between an air supply located in the chassis and the hub,
the second communication means providing fluid communication between the first communication means and the tire,
the first communication means being disposed generally between the inner diameter of the hub at an inboard side of the hub and the outer diameter of the spindle means,
the spindle means providing support for the hub and bearing means,
the seal means providing a seal between the first communication means and the hub,
whereby sealed fluid communication is provided between the air supply in the chassis, through the first communication means, through the second communication means, to the tire.

8. A method of retrofitting an existing spindle, an existing wheel and an existing hub to accommodate a central tire inflation system, the central tire inflation system including a seal carrier providing communication between an air supply on a chassis and the hub, the hub and a corresponding wheel providing sealed communication between the air supply and an interior of a tire, the method comprising:
modifying the existing spindle to fixedly accommodate the seal carrier,
fixedly attaching the seal carrier to the spindle,
modifying the hub to provide an air passageway between the seal carrier and the wheel,
modifying an inboard side of the hub to engage the seal carrier,
inserting two seals between the seal carrier and the hub, one seal on each side of a first port leading to the air supply in the chassis, one seal on each side of a second port leading to an air passageway in the hub, the two seals providing a sealed passageway between the air supply on the chassis, through the seal carrier, to the hub,
modifying the wheel to provide an air passageway between the hub and the interior of the tire,
each said passageway cooperating to provide communication between the air supply in the chassis and the interior of the tire.

9. The method of claim 8,
wherein the seal carrier is further characterized as a spindle sleeve.

10. A kit for retrofitting a vehicle wheel end assembly to accommodate a central tire inflation system, the central tire inflation system providing an air supply on a chassis of the vehicle and a sealed passageway between the air supply and at least one tire,
the kit comprising:
a spindle,
a seal carrier,
a hub,
a wheel,
the spindle providing a fixed support for the hub and fixedly accommodating the seal carrier,
the seal carrier fixedly mounted to the spindle, the seal carrier providing a sealed air passageway between the air supply and the hub, the sealed air passageway extending through a first port leading to the air supply in the chassis and a second port leading to an air passageway in the hub, the sealed air passageway being bound by two rotary seals disposed on opposing sides of the first and second ports, the two rotary seals sealably engaging the seal carrier and the hub to define a passageway therebetween,
the hub being rotatable about the seal carrier, the hub providing an air passageway from the seal carrier to the wheel,
the wheel mounted to the hub, the wheel providing an air passageway from the hub to the tire.

11. The kit of claim 10,
wherein the seal carrier is further characterized as a spindle sleeve.
